# EUROPÄISCHE PATENTSCHRIFT

(11) **EP 0 620 132 B1**
(45) Veröffentlichungstag und Bekanntmachung des Hinweises auf die Patenterteilung: **29.07.1998**
(21) Anmeldenummer: 94105501.4
(22) Anmeldetag: 08.04.1994
(51) Int. Cl.: B60G 3/01, B60G 17/04, B60K 7/00

(54) **Vorrichtung zum Antreiben, Führen und Lenken eines Fahrzeugrades**
Installation for driving, guiding and steering a vehicle wheel
Installation pour entraîner, guider et diriger une roue de véhicule

(30) Priorität: 15.04.1993 DE 9305633 U
(43) Veröffentlichungstag der Anmeldung: 19.10.1994
(73) Patentinhaber: Compact Truck AG, 6300 Zug (CH); Lutz, Franz, 89584 Ehingen (DE); Kaspar, Ernst, 89597 Munderkingen (DE)
(72) Erfinder: Kaspar, Ernst, D-89597 Munderkingen (DE)
(74) Vertreter: Grünecker, Kinkeldey, Stockmair & Schwanhäusser Anwaltssozietät

(56) Entgegenhaltungen:
- WO-A-93/05969
- DE-A- 2 623 757
- US-A- 3 581 682
- US-A- 3 997 018
- US-A- 5 150 763

## Beschreibung

Die Erfindung betrifft eine Vorrichtung zum Antreiben, Führen und Lenken eines an einem Achsträger gehaltenen Fahrzeugrades der im Oberbegriff des Anspruchs 1 angegebenen Gattung. Eine solche Vorrichtung ist aus der WO-A-93/05969, welche ein Federbein für hydraulische Antriebe betrifft, bekannt.

Herkömmliche Fahrzeuge, insbesondere Schwerlastfahrzeuge, besitzen als Folge ihrer konventionellen Fahrwerks- und Radaufhängungskonstruktion eine beträchtliche (Rahmen-)Höhe. So brauchen herkömmliche Starrachsen im Bereich der Fahrzeuglängsachse, d.h. im Bereich der Fahrzeugmitte, viel Platz, was wegen der starrachstypischen, langen Federwege, insbesondere bei größeren Rad- bzw. Reifendurchmessern, zu beträchtlichen Höhen des Fahrzeugrahmens über dem Erdboden führt.

Ebenso haben herkömmliche Verteilergetriebe einen hohen Raumbedarf in der Fahrzeuglängsachse, d.h. in der Fahrzeugmitte, da zu den angetriebenen Rädern Gelenkwellen geführt werden müssen. Folglich ergeben sich auch bei der Verwendung herkömmlicher Verteilergetriebe beträchtliche Höhen des Fahrzeugrahmens über der Fahrbahnoberfläche.

Fahrzeuge, insbesondere Schwerlastfahrzeuge, die auf Baustellen operieren oder die durch Fabrikhalleneinfahrten hindurch sollen, sowie solche Schwerlastfahrzeuge, die auf öffentlichen Straßen fahren sollen und dabei Brücken zu unterfahren und Tunnel zu durchqueren haben, sind im Hinblick auf ihre Gesamthöhe Beschränkungen unterworfen. Das hat zur Folge, daß eine Vergrößerung der nutzbaren Fahrzeughöhe, d.h. der Höhe oberhalb des Fahrzeugrahmens, im wesentlichen nur zu erreichen ist durch entsprechendes Herabsetzen der Fahrzeugrahmenhöhe (über dem Erdboden).

Der Erfindung liegt deshalb die Aufgabe zugrunde, durch Verbesserungen im Bereich der Radaufhängung und des Antriebskonzeptes für Fahrzeuge, insbesondere Schwerlastfahrzeuge, zu ermöglichen, daS die Rahmenhöhe beträchtlich verringerbar ist.

Diese Aufgabe wird erfindungsgemäß durch die im Anspruch 1 angegebene Erfindung gelöst.

Der mit Hilfe dieser Erfindung erzielbare technische Fortschritt ergibt sich in erster Linie daraus, daß der Fahrzeugrahmen sehr weit abgesenkt werden kann, da erfindungsgemäß weder Starrachsen noch Gelenkwellen vorgesehen sind.

Bevorzugte Ausführungsformen der Erfindung sind in den Unteransprüchen beschrieben.

Die Erfindung wird im folgenden anhand eines Ausführungsbeispieles und unter Bezug auf die Zeichnung näher beschrieben. In dieser zeigt:
- Fig.1: eine teilweise im Schnitt dargestellte Ansicht der erfindungsgemäßen Vorrichtung;
- Fig.2: eine erste Ausführungsform der zur Führung des Federzylinders vorgesehenen Lenker und
- Fig.3: eine zweite Ausführungsform der zur Führung des Federzylinders vorgesehenen Lenker.

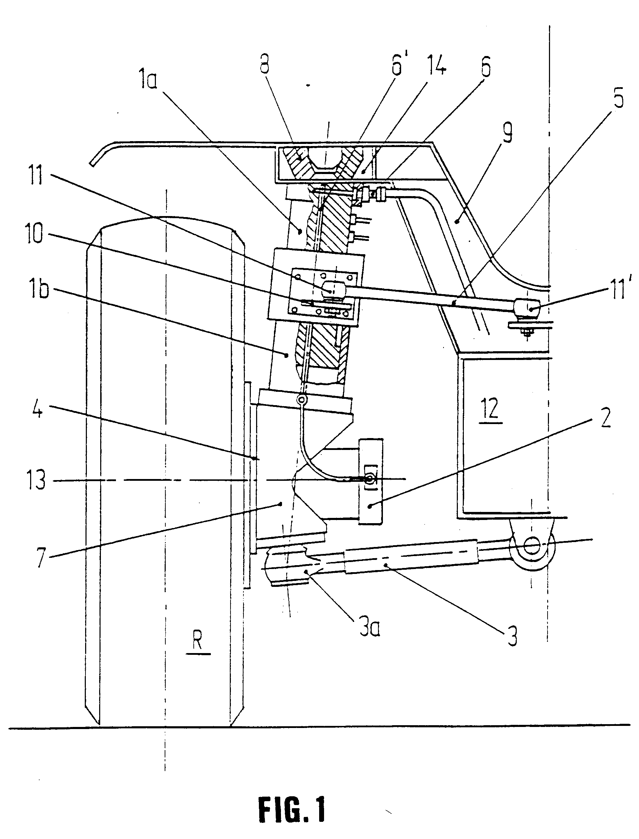

Wie in Fig. 1 dargestellt, ist das Fahrzeugrad R, welches eine Radachse 13 besitzt, an einem Achsträger 7 gehalten und mit Hilfe eines Federzylinders abgestützt sowie mit Hilfe von Querlenkern 3 geführt. Der Federzylinder umfaßt ein Innenrohr 1a und ein Außenrohr 1b. Innen- und Außenrohr sind verschieblich und verdrehbar zueinander angeordnet.

Mittig durch den Federzylinder erstreckt sich eine Hydraulikölzuführung 6', welche im wesentlichen aus zwei konzentrischen Rohren besteht, welche so abgedichtet sind, daß sich die beiden Rohre in Längsrichtung zueinander verschieben und relativ zueinander verdrehen können. Ferner ist die Hydrauliköldurchführung 6' mit Öl-Ausgleichseinrichtungen (nicht dargestellt) versehen, um Volumenänderungen als Folge von Federbewegungen zu kompensieren.

Die Hydraulikdurchführung 6' ist an eine Hydraulikölzuführung 6 angeschlossen. Die Hydrauliköldurchführung 6' steht in Strömungsverbindung mit einem Hydraulikmotor 2, der einen Einzelradantrieb darstellt und zusammen mit einem Schaltgetriebe 4 in dem Achsträger 7 aufgenommen ist. Der Achsträger 7 und damit auch der Hydraulikmotor 2 und das Schaltgetriebe 4 sind im Nabenbereich des Fahrzeugrades R, d.h., im Bereich der Radachse bzw. des Rad-Drehmittelpunktes 13 angeordnet.

Das untere Ende des Federzylinder-Außenrohres 1b ist fest mit der Oberseite des Achsträgers 7 verbunden, während das obere Ende des Federzylinder-Innenrohres 1a räumlich beweglich bzw. dreidimensional beweglich in einem elastischen Lager 8 gelagert ist. Dieses elastische Lager 8, welches vorzugsweise als Gummilager ausgebildet ist, ist an einem Querholm 14 befestigt, welcher sich im wesentlichen parallel zur Radachse 13 erstreckt.

Dieser Querholm 14 wird von einem Träger 9 gehalten, mit dessen oberem Ende der Querholm verbunden ist. Das untere Ende des Trägers 9 ist mit dem Fahrzeugrahmen 12 verschweißt.

Wie in Fig. 1 dargestellt, ist der Fahrzeugrahmen 12 so tief angeordnet, daß er sich im wesentlichen auf der Höhe der Radachse 13, d.h. im wesentlichen auf der Höhe des Hydraulikmotors 2 befindet.

Die beiden Querlenker 3 sind mit ihren dem Fahrzeugrad zugewandten Enden 3a an der Unterseite des Achsträgers 7 angelenkt, während die entgegengesetzten Enden der Querlenker 3 an der Unterseite des Fahrzeugrahmens 12 angelenkt sind.

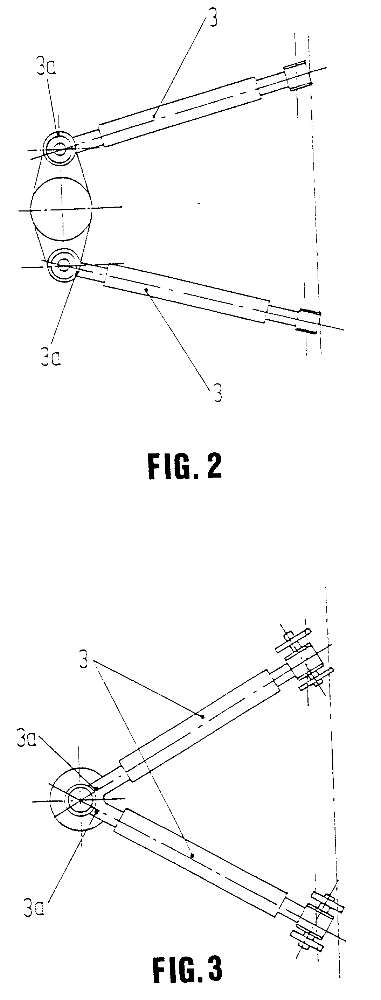

Gemäß der in Fig. 2 dargestellten Ausführungsform sind die Enden 3a der beiden Lenker im Abstand voneinander angelenkt. Gemäß der in Fig. 3 dargestellten Ausführungsform sind jedoch die Enden 3a der beiden Querlenker 3 miteinander verbunden.

Die Querlenker 3 dienen zum Aufnehmen der im Fahrzeugbetrieb auftretenden Beschleunigungskräfte sowie Bremskräfte sowie ferner der Seitenführungskräfte und der resultierenden Stützkräfte aus der Aufstandskraft (bei Verwendung der erfindungsgemäßen Vorrichtung für Kranfahrzeuge). Vom Träger 9 sind als Folge der beiden Querlenker lediglich noch aufzunehmen die Aufstandskraft sowie die Restkräfte des Bremsens und Beschleunigens. Folglich ist durch die erfindungsgemäße Konstruktion der Träger 9 entlastet von all den Kräften, welche von den Querträgern aufgenommen werden. Dieses wiederum hat zur Folge, daß der Träger 9 konstruktiv recht einfach gestaltet werden kann, was zu einer Gewichtsersparnis führt.

Wie ferner in Fig. 1 dargestellt, ist ein Lenkhebel 10 an dem Federzylinder-Außenrohr 1b befestigt, welches fest mit dem Achsträger 7 verbunden ist. An dem Lenkhebel 10 ist eine Spurstange 5 mit Hilfe eines ersten Kugelkopfes 11 räumlich, d.h. dreidimensional beweglich, gelagert. Ein zweiter Kugelkopf 11' ist am anderen Ende der Spurstange 5 vorgesehen und mit einer Einrichtung (nicht dargestellt) zum Lenken des Fahrzeugrades R verbunden.

Im Bereich des Federzylinders 1a, 1b besteht die Hydrauliköldurchführung 6' aus einem mittig im Federzylinder-Innenrohr 1a vorgesehenen ersten Rohrabschnitt und einen mittig im Federzylinder-Außenrohr 1b vorgesehenen zweiten Rohrabschnitt. Diese beiden Abschnitte der Öldurchführung 6' weisen unterschiedliche Durchmesser auf, so daß die beiden Rohrabschnitte einander über eine gewisse Länge überlappend ineinandergesteckt sind. Gleichzeitig sind die beiden Rohrabschnitte gegeneinander abgedichtet, so daß Relativbewegungen des (federnden) Federzylinderaußenrohrs 1b relativ zum (zur gefederten Masse gehörigen) Federzylinder-Innenrohr 1a von den beiden Rohrleitungsabschnitten der Öldurchführung 6' mitgemacht werden können. Wie schon erwähnt, sind nicht dargestellte Ausgleichsbehälter oder dergleichen vorgesehen, um als Folge von Federungsbewegungen auftretende Volumenänderungen zu kompensieren.

## Patentansprüche

1. Vorrichtung zum Antreiben, Führen und Lenken eines an einem Achsträger (7) gehaltenen Fahrzeugrades (R) in einem mit einem Rahmen (12) versehenen Fahrzeug, mit einem Federzylinder, der ein Außenrohr (1b) und ein Innenrohr (1a) aufweist und von einer Hydrauliköldurchführung (6, 6') mittig durchsetzt ist, und einem mit der Hydrauliköldurchführung verbundenen Hydraulikmotor (2), der zusammen mit einem in dem Achsträger (7) aufgenommenen Schaltgetriebe (4) im Nabenbereich des Fahrzeugrades (R) angeordnet ist, wobei das untere Ende des Federzylinders fest mit dem Achsträger (7) verbunden ist und sich das obere Ende des Federzylinders auf dem Fahrzeugrahmen (12) abstützt, **dadurch gekennzeichnet,** daß
der Rahmen (12) des Fahrzeuges im wesentlichen auf die Höhe der Radachse (13) abgesenkt ist,
daß das Federzylinderaußenrohr (1b) lenkergeführt ist,
daß das untere Ende des Federzylinderaußenrohres (1b) fest mit dem Achsträger (7) verbunden ist und
daß das obere Ende des Federzylinderinnenrohres (1a) räumlich beweglich in einem elastischen Lager (8) gelagert ist, welches an einem Querholm (14) befestigt ist, der sich über einen Träger (9) auf dem Fahrzeugrahmen (12) abstützt.

2. Vorrichtung nach Anspruch 1, **dadurch gekennzeichnet,** daß zwei Querlenker (3) vorgesehen sind, deren dem Fahrzeugrad (R) zugewandte Enden (3a) an der Unterseite des Achsträgers (7) befestigt sind und deren entgegengesetzte Enden an der Unterseite des Fahrzeugrahmens (12) angelenkt sind.

3. Vorrichtung nach Anspruch 2, **dadurch gekennzeichnet,** daß die dem Fahrzeugrad (R) zugewandten Enden (3a) der beiden Querlenker (3) miteinander verbunden sind.

4. Vorrichtung nach einem der Ansprüche 1 bis 3, **dadurch gekennzeichnet,** daß an dem Federzylinderaußenrohr (1b) ein Lenkhebel (10) befestigt ist, an welchem eine Spurstange (5) mit eines Kugelkopfes (11) gelagert ist.

5. Vorrichtung nach einem der Ansprüche 1 bis 4, **dadurch gekennzeichnet,** daß das Schaltgetriebe (4) zweistufig schaltbar ausgebildet ist.

## Claims

1. A device for driving, guiding and steering a vehicle wheel (R) held on an axle carrier (7), in a vehicle provided with a frame (12), comprising a shock-absorbing cylinder which comprises an outer tube (1b) and an inner tube (1a) and through which a hydraulic oil passage (6, 6') centrally extends, and a hydraulic motor (2) which is connected to said hydraulic oil passage (6, 6') and which is arranged in the hub area of said vehicle wheel (R) together with a shift transmission (4) received in said axle carrier (7), with the lower end of said shock-absorbing cylinder being firmly connected to said axle carrier (7) and the upper end of said shock-absorbing cylinder being supported on said vehicle frame (12), **characterized in** that
said frame (12) of said vehicle is substantially lowered to the level of the wheel axle (13),
that the outer tube (1b) of said shock-absorbing cylinder is link-guided,
that the lower end of the outer tube (1b) of said shock-absorbing cylinder is firmly connected to said axle carrier (7), and
that the upper end of the inner tube (1a) of said shock-absorbing cylinder is supported in a spatially movable manner in an elastic bearing (8) which is secured to a transverse bar (14) which is supported via a carrier (9) on said vehicle frame (12).

2. A device according to claim 1, **characterized in** that there are provided two transverse links (3) whose ends (3a) facing said vehicle wheel (R) are secured to the bottom side of said axle carrier (7) and whose opposite ends are articulated to the bottom side of said vehicle frame (12).

3. A device according to claim 2, **characterized in** that the ends (3a) of said two transverse links (3) which face said vehicle wheel (R) are interconnected.

4. A device according to any of claims 1 to 3, **characterized in** that the outer tube (1b) of said shock-absorbing cylinder has secured thereto a swivel link (10) which has supported thereon a tie rod (5) with a ball-shaped head (11).

5. A device according to any one of claims 1 to 4, **characterized in** that said shift transmission (4) is designed to be shiftable in two steps.

## Revendications

1. Installation pour entraîner, guider et diriger une roue de véhicule (R) maintenue à un support d'essieu (7) dans un véhicule pourvu d'un châssis (12), avec un cylindre à ressort qui présente un tube extérieur (1b) et un tube intérieur (1a) et qui est traversé en son centre par une conduite d'huile hydraulique (6, 6'), et un moteur hydraulique (2) relié à la conduite d'huile hydraulique, qui est disposé ensemble avec un mécanisme de transmission (4) repris dans le support d'essieu (7) dans la zone du moyeu de la roue de véhicule (R), l'extrémité inférieure du cylindre à ressort étant reliée fixement avec le support d'essieu (7) et l'extrémité supérieure du cylindre à ressort s'appuyant sur le châssis de véhicule (12), caractérisée en ce que le châssis (12) du véhicule est principalement abaissé à hauteur de l'essieu de roue (13), en ce que le tube extérieur de cylindre à ressort (1b) est guidé par un bras oscillant, en ce que l'extrémité inférieure du tube extérieur de cylindre à ressort (1b) est reliée fixement au support d'essieu (7), et en ce que l'extrémité supérieure du tube intérieur de cylindre à ressort (1a) est logée de manière spatialement mobile dans un palier (8) élastique, qui est fixé à un montant transversal (14) qui s'appuie sur le châssis (12) du véhicule via un support (9).

2. Installation selon la revendication 1, caractérisée en ce que deux bras oscillants transversaux (3) sont prévus, dont les extrémités (3a) qui font face à la roue de véhicule (R) sont fixées à la partie inférieure du support d'essieu (7) et dont les extrémités se faisant face sont articulées à la partie inférieure du châssis de véhicule (12).

3. Installation selon le revendication 2, caractérisée en ce que les extrémités (3a) des deux bras oscillants transversaux (3) faisant face à la roue de véhicule (R) sont reliées entre elles.

4. Installation selon l'une quelconque des revendications 1 à 3, caractérisée en ce qu'un levier de direction (10) est fixé au tube extérieur de cylindre à ressort (1b), sur lequel est logée une barre d'accouplement (5) à l'aide d'une rotule.

5. Installation selon l'une quelconque des revendications 1 à 4, caractérisée en ce que le mécanisme de transmission (4) est formé de manière à être embrayable dans deux positions.
